# FASCICULE DE BREVET EUROPEEN

(11) **EP 2 935 853 B1**
(45) Date de publication et mention de la délivrance du brevet: **08.07.2020**
(21) Numéro de dépôt: 13819020.2
(22) Date de dépôt: 19.12.2013
(51) Int. Cl.: F02M 31/04, F01N 5/02, F01P 7/16, F02M 35/10, F02B 29/04, F02M 26/06

(54) **DISPOSITIF DE GESTION THERMIQUE DE L'AIR D'ADMISSION D'UN MOTEUR ET PROCÉDÉ DE GESTION THERMIQUE ASSOCIÉ**
LUFT-/WÄRMEVERWALTUNG EINES MOTOREINLASSES SOWIE ZUGEHÖRIGES WÄRMEVERWALTUNGSVERFAHREN
ENGINE INTAKE AIR THERMAL MANAGEMENT DEVICE AND ASSOCIATED THERMAL MANAGEMENT METHOD

(30) Priorité: 21.12.2012 FR 1262741
(43) Date de publication de la demande: 28.10.2015
(73) Titulaire: Valeo Systemes Thermiques, 78320 Le Mesnil Saint Denis (FR)
(72) Inventeur: GESSIER, Bertrand, F-78490 Montfort L'Amaury (FR); JOUANNY, Philippe, F-78310 Maurepas (FR); BORGES-ALEJO, José, F-75014 Paris (FR); SOUKEUR, Zoulika, F-78190 Trappes (FR)
(74) Mandataire: Tran, Chi-Hai
(86) Numéro de dépôt international: PCT/EP2013/077290
(87) Numéro de publication internationale: WO 2014/096132

(56) Documents cités:
- EP-A2- 1 101 914
- WO-A2-2008/087342
- DE-A1-102007 005 246
- DE-A1-102007 029 036
- US-A1- 2011 259 287

## Description

La présente invention concerne un dispositif de gestion thermique de l'air d'admission d'un moteur à explosion d'un véhicule automobile et plus particulièrement d'un moteur à explosion turbocompressé et disposant d'un échangeur de chaleur au sein du circuit d'admission d'air.

Dans des conditions climatiques froides, un moteur à explosion notamment diesel, a des difficultés de démarrage et de montée en température par rapport à un moteur essence. En effet, un temps de chauffe est nécessaire avant que les gaz d'échappement aient une température suffisante pour que les dispositifs de traitement des gaz d'échappement comme le catalyseur ou le filtre à particule puissent être complètement efficace. De plus des conditions climatiques froides peuvent entrainer des soucis de combustion lors du démarrage à froid et entraîner une surconsommation ainsi qu'une augmentation des émissions polluantes.

Une solution connue dans le cas d'un véhicule équipé d'un turbocompresseur et d'un échangeur de chaleur placé dans le circuit d'admission d'air afin de refroidir l'air d'admission, est de contourner ledit échangeur de chaleur via un circuit de contournement afin que les gaz d'échappement montent en température plus rapidement. De plus, si le véhicule est également équipé d'un système de recirculation des gaz d'échappement, il est également connu d'utiliser un circuit de contournement pour contourner un échangeur de chaleur placé dans ledit système de recirculation des gaz d'échappement et amener les gaz d'échappement chaud dans le circuit d'admission d'air.

Une autre solution connue, est de réchauffer directement l'air d'admission d'air dans le circuit de contournement de l'échangeur de chaleur du circuit d'admission d'air, au moyen d'un réchauffeur électrique comme décrit dans la demande DE 10 2007 029 036 A1, ou encore au moyen d'un second échangeur de chaleur toujours placé dans le circuit de contournement de l'échangeur de chaleur du circuit d'admission d'air et relié à un échangeur de chaleur placé dans un système de recirculation des gaz d'échappement, comme décrit dans la demande DE 10 2007 005 246 A1.

Cependant, de telles solutions afin de réchauffer l'air d'admission ne sont pas satisfaisantes car sont soit coûteuses en énergie à utiliser soit alors ont un temps de montée en température insuffisant et prendre une place importante dans le compartiment moteur.

Le document US20110259287 A1 divulgue un dispositif de gestion thermique de l'air d'admission d'un moteur à explosion selon le préambule de la revendication 1.

Un des buts de l'invention est donc de remédier aux inconvénients de l'art antérieur et de proposer un dispositif de gestion thermique de l'air d'admission amélioré, notamment en conditions climatiques froides, ainsi que son procédé de gestion thermique.

L'invention concerne donc un dispositif de gestion thermique de l'air d'admission d'un moteur à explosion équipé d'un turbocompresseur selon la revendication 1.

Le emplacement du second échangeur de chaleur directement sur la ligne d'échappement principale permet de maximiser l'énergie calorifique disponible et récupérable pour réchauffer l'air d'admission au niveau du premier échangeur de chaleur. Cela permet ainsi une montée en température plus rapide du moteur et une meilleure combustion lors du démarrage à froid en condition climatique froide. Cette meilleure combustion entraine une baisse de la consommation et une diminution des émissions polluantes.

De préférence, le dispositif de gestion thermique comporte en outre un système de récupération des gaz d'échappement dit basse pression comportant une dérivation des gaz d'échappement placée sur la ligne d'échappement principale en aval de la turbine et le second échangeur de chaleur est placé entre la turbine et la dérivation du système de récupération des gaz d'échappement.

Ce placement du second échangeur de chaleur entre la turbine et la dérivation du système de récupération des gaz d'échappement permet au second échangeur de chaleur de jouer également le rôle d'échangeur de chaleur pour ledit système de récupération des gaz d'échappement et ainsi de refroidir si besoin les gaz d'échappement destinés à retourner vers le circuit d'admission d'air. De plus, le placement du second échangeur directement sur la ligne principale d'échappement permet, dans ce cas de figure, de récupérer de l'énergie calorifique des gaz d'échappement et ce même si le système de récupération des gaz d'échappement est fermé.

De préférence, le second échangeur de chaleur est placé en aval des dispositifs de traitement des gaz d'échappement.

Cela permet de garantir l'efficacité et la montée en température des dispositifs de traitement des gaz d'échappement car les gaz d'échappement qui les traversent n'ont pas subit de prélèvement d'énergie calorifique par le second échangeur de chaleur..

De préférence, la ligne d'échappement principale comporte un circuit de contournement du second échangeur de chaleur et dont l'ouverture et la fermeture sont commandées par une vanne de contournement.

Cela permet de contourner le second échangeur de chaleur lorsqu'il n'est pas nécessaire de chauffer l'air d'admission ou de refroidir les gaz d'échappement.

Selon l'invention, le premier échangeur de chaleur est également reliée à :
- une boucle de refroidissement reliant la sortie de fluide caloporteur du premier échangeur de chaleur à l'entrée de fluide caloporteur d'un radiateur basse température et reliant la sortie de fluide caloporteur dudit radiateur basse température à l'entrée de fluide caloporteur du premier échangeur de chaleur,
- une boucle de contournement reliant directement l'entrée et la sortie de fluide caloporteur dudit premier échangeur de chaleur,
et :
- une vanne de régulation est placée à une jonction commune aux boucles de chauffage, de refroidissement et de contournement, afin de commander sélectivement la circulation du fluide caloporteur dans chacune desdites boucles de chauffage, de refroidissement ou de contournement,
- une pompe de circulation du fluide caloporteur est placée entre le premier échangeur de chaleur et une jonction entre les boucles de chauffage, de refroidissement et de contournement, de sorte à mettre en mouvement le fluide caloporteur.

La boucle de refroidissement permet au premier échangeur de chaleur de jouer le rôle de refroidisseur de l'air d'admission si ce dernier est trop chaud pour la combustion dans les cylindres du moteur et ainsi le premier échangeur de chaleur permet d'augmenter par refroidissement la quantité d'air d'admission arrivant aux cylindres. La boucle de contournement C est utile lorsque qu'il n'est pas nécessaire de refroidir ou réchauffer l'air d'admission et permet néanmoins au fluide caloporteur de circuler afin d'éviter les phénomènes d'ébullition et permet également d'homogénéiser le fluide caloporteur.

De préférence, la vanne de régulation comporte une entrée et trois sorties de fluide caloporteur, l'entrée de fluide caloporteur étant reliée à la sortie de fluide caloporteur du premier échangeur de chaleur, et chacune des trois sorties de fluide caloporteur étant reliée à l'une des boucles de chauffage, de refroidissement ou de contournement.

De préférence, la vanne de régulation comporte trois entrées et une sortie de fluide caloporteur, la sortie de fluide caloporteur étant reliée à l'entrée de fluide caloporteur du premier échangeur de chaleur, et chacune des trois entrées de fluide caloporteur étant reliée à l'une des boucles de chauffage, de refroidissement ou de contournement.

De préférence, le second échangeur de chaleur est également relié à une boucle de gestion thermique du moteur comprenant notamment un système de gestion thermique du moteur.

La communication entre le second échangeur de chaleur et la boucle de gestion thermique permet, par exemple, d'aider au chauffage de l'habitacle ou du moteur. De plus, cela peut permettre le refroidissement des gaz d'échappement pour un système récupération des gaz d'échappement.

De préférence :
- le second échangeur de chaleur est relié en parallèle avec le système de gestion thermique du moteur, la boucle de gestion thermique du moteur rejoignant la boucle de chauffage en amont dudit second échangeur de chaleur et les deux boucles divergeant en aval dudit second échangeur de chaleur,
- une vanne trois voies est placée à l'une des jonctions entre les boucles de chauffage et de gestion thermique du moteur, afin de commander la circulation du fluide caloporteur dans l'une desdites boucles de chauffage, ou de gestion thermique du moteur.

De préférence :
- l'entrée de fluide caloporteur du second échangeur de chaleur est reliée à une dérivation partielle du fluide caloporteur de la boucle de gestion thermique du moteur située en aval d'une pompe mécanique et d'un moyen de contrôle du débit (34) du fluide caloporteur circulant dans le moteur appartenant chacun au système de gestion thermique du moteur,
- la sortie de fluide caloporteur du second échangeur de chaleur est quant à elle reliée directement ou indirectement à une réinjection de fluide caloporteur dans la boucle de gestion thermique du moteur,
- la boucle de chauffage comporte un circuit de contournement du premier échangeur de chaleur, reliant la sortie de fluide caloporteur du second échangeur de chaleur et la réinjection de fluide caloporteur dans la boucle de gestion thermique du moteur, ledit circuit de contournement comportant une vanne d'ouverture/fermeture.

Ces caractéristiques permettent notamment d'économiser la pompe de circulation du fluide caloporteur dans la circulation du fluide caloporteur à l'intérieur de la boucle de chauffage. En effet, dans cet aspect la circulation du fluide caloporteur à l'intérieur de la boucle de chauffage peut être assurée par la pompe mécanique de la boucle de gestion thermique du moteur. En outre, il est permis de restituer l'intégralité des calories issues des gaz d'échappement uniquement dans l'air d'admission du moteur. Par l'intermédiaire du moyen de contrôle du débit du fluide caloporteur circulant dans le moteur, le débit de fluide caloporteur dans le moteur peut être totalement interrompu.

L'invention concerne également un procédé de gestion de thermique de la température d'air d'admission d'un moteur selon la revendication 10.

Ce dernier mode de régulation permet une régulation plus fine de la température de l'air d'admission.

Le dispositif de gestion mis en œuvre dans le procédé de gestion selon l'invention est préférentiellement un dispositif de gestion qui peut passer également dans un mode détourné où le fluide caloporteur circule entre le second échangeur de chaleur et la boucle de gestion thermique du moteur.

Ce mode détourné peut être utilisé lorsqu'il n'est pas nécessaire de réchauffer l'air d'admission. L'énergie calorifique prélevée aux gaz d'échappement peut être utilisée pour aider au chauffage de l'habitacle, contribuer à la montée en température du moteur ou encore pour refroidir les gaz d'échappement en vue de leur utilisation dans un système récupération des gaz d'échappement.

Dans le procédé de gestion selon l'invention, le passage au mode détourné est de préférence réalisé par redirection du fluide caloporteur vers ladite boucle de gestion thermique du moteur au moyen de la vanne trois voies.

Dans le procédé de gestion selon l'invention, le passage au mode détourné est de préférence réalisé par ouverture du circuit de contournement du premier échangeur de chaleur par la vanne d'ouverture/fermeture.

D'autres caractéristiques et avantages de l'invention apparaîtront plus clairement à la lecture de la description suivante, donnée à titre d'exemple illustratif et non limitatif, parmi lesquelles :
- la figure 1 montre une représentation schématique d'un moteur à explosion et de son dispositif de gestion thermique de l'air admission,
- la figure 2 montre une représentation schématique des boucles de circulation de fluide caloporteur d'un dispositif de gestion thermique de l'air admission selon un premier mode de réalisation,
- la figure 3 montre une représentation schématique des boucles de circulation de fluide caloporteur d'un dispositif de gestion thermique de l'air admission selon un deuxième mode de réalisation.

Les éléments identiques portent des références similaires sur les différentes figures.

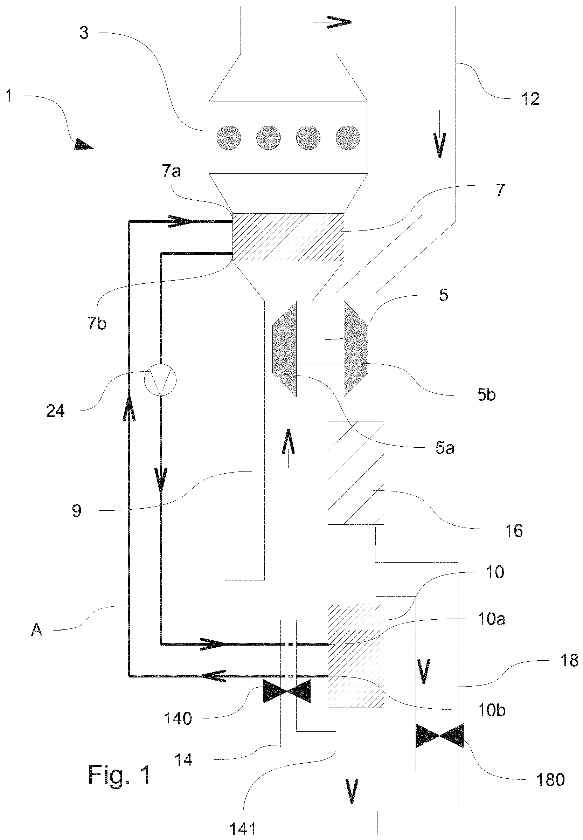

La figure 1 montre une représentation schématique d'un moteur 3 à explosion équipé d'un turbocompresseur 5 et de son dispositif de gestion thermique 1 de l'air admission.

Le moteur 3, notamment diesel, comporte un circuit d'admission d'air 9 qui apporte l'air pour la combustion à l'intérieur des cylindres, ainsi qu'une ligne d'échappement principale 12 pour l'évacuation des gaz d'échappement. Le moteur 3 comporte également un turbocompresseur 5 comprenant une turbine 5b placée dans la ligne d'échappement principale 12 et un compresseur 5a placé dans le circuit d'admission d'air 9.

La ligne d'échappement principale 12 peut également comporter, en aval de la turbine 5b, des dispositifs de traitement des gaz d'échappement 16, par exemple un catalyseur et/ou un filtre à particule.

Le dispositif de gestion thermique 1 comprend, placé dans le circuit d'admission d'air 9 entre le compresseur 5a et le moteur 3, un premier échangeur de chaleur 7 comportant une entrée 7a et une sortie 7b de fluide caloporteur. Le dispositif de gestion thermique 1 comprend également un second échangeur de chaleur 10 placé sur la ligne d'échappement principale 12 du moteur 3 et captant l'énergie calorifique des gaz d'échappement, transférant ladite énergie à un fluide caloporteur circulant dans une boucle de chauffage A depuis une sortie 10b de fluide caloporteur vers l'entrée 7a de fluide caloporteur du premier échangeur de chaleur 7 avec laquelle elle est reliée.

La boucle de chauffage A est formée ensuite par la liaison directe ou indirecte de la sortie 7b de fluide caloporteur du premier échangeur 7 et l'entrée 10a de fluide caloporteur du second échangeur de chaleur 10.

Ce placement du second échangeur de chaleur 10 directement sur la ligne d'échappement principale 12 permet de maximiser l'énergie calorifique disponible et récupérable pour réchauffer l'air d'admission au niveau du premier échangeur de chaleur 7.

Cela permet ainsi une montée en température rapide de l'air d'admission, ce qui implique une meilleure combustion. De surcroît, on note une baisse de la consommation et une diminution des émissions polluantes.

afin de diminuer les émissions polluantes émise par le moteur, leur de sa phase de montée en température. Cela contribue en outre à une montée en température plus rapide du moteur et une meilleure combustion lors du démarrage à froid en condition climatique froide. Le dispositif de gestion thermique 1 comprend en outre une pompe 24 de circulation du fluide caloporteur dans la circulation du fluide caloporteur à l'intérieur de la boucle de chauffage A.

Le dispositif de gestion thermique 1 peut également comporter un système de récupération des gaz d'échappement 14 dit basse pression. La ligne d'échappement principale 12 comporte ainsi une dérivation 141 des gaz d'échappement placée en aval de la turbine 5b et des dispositifs de traitement des gaz d'échappement 16 et débouchant dans le circuit d'admission d'air 9 en amont du compresseur 5a. L'ouverture et la fermeture du système de récupération des gaz d'échappement 14 sont commandées par une vanne 140 qui permet de réguler le débit de gaz d'échappement entrant dans le système de récupération des gaz d'échappement 14.

Dans ce cas de figure, le second échangeur de chaleur 10 est placé entre la turbine 5b et la dérivation 141 du système de récupération des gaz d'échappement 14, de préférence en aval des dispositifs de traitement des gaz d'échappement 16. Cela permet de garantir l'efficacité et la montée en température des dispositifs de traitement des gaz d'échappement car les gaz d'échappement qui les traversent n'ont pas subit de prélèvement d'énergie calorifique par le second échangeur de chaleur.

Ce placement du second échangeur de chaleur 10 entre la turbine 5b et la dérivation 141 du système de récupération des gaz d'échappement 14 permet au second échangeur de chaleur 10 de jouer également le rôle d'échangeur de chaleur pour le système de récupération des gaz d'échappement 14 et ainsi de refroidir si besoin les gaz d'échappement destinés à retourner vers le circuit d'admission d'air 9. De plus, le placement du second échangeur directement sur la ligne principale d'échappement 12 permet, dans ce cas de figure, de récupérer de l'énergie calorifique des gaz d'échappement et ce même si le système de récupération des gaz d'échappement 14 est fermé.

Dans le cas où il n'est pas nécessaire de chauffer l'air d'admission ou de refroidir les gaz d'échappement, il est possible de contourner le second échangeur 10 via un circuit de contournement 18 placé sur la ligne d'échappement principale 12 et dont l'ouverture et la fermeture sont commandées par une vanne 180.

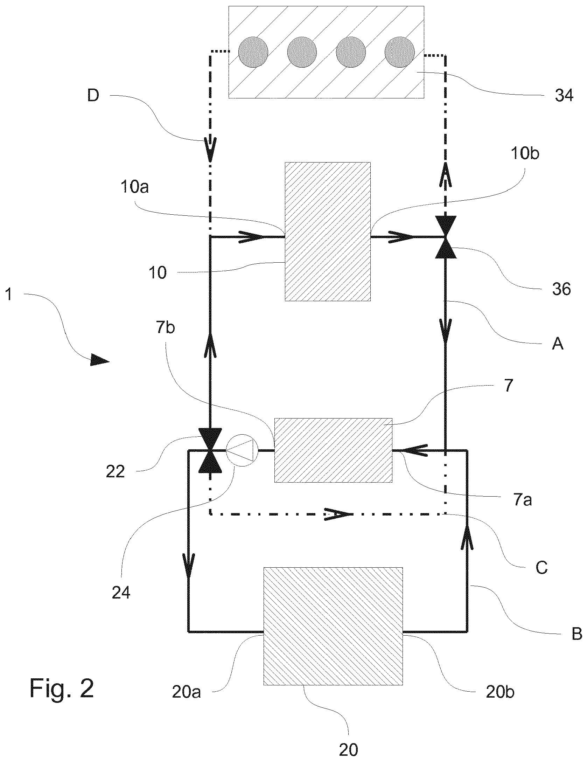

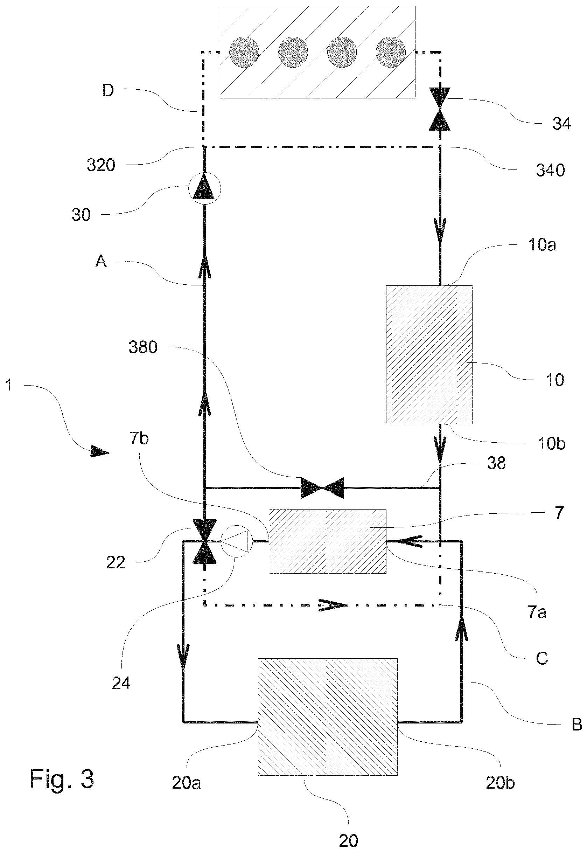

Le premier échangeur de chaleur 7 peut également jouer le rôle connu de refroidisseur de l'air d'admission si ce dernier est trop chaud pour la combustion dans les cylindres du moteur 3 et ainsi augmenter par refroidissement la quantité d'air d'admission arrivant aux cylindres. Pour cela, le premier échangeur de chaleur 7 est également relié à une boucle de refroidissement B comme montré sur les figures 2 et 3 illustrant les différentes boucles de circulation de fluide caloporteur.

Cette boucle de refroidissement B relie la sortie 7b de fluide caloporteur du premier échangeur de chaleur 7 à l'entrée 20a de fluide caloporteur d'un radiateur basse température 20 et relie la sortie 20b de fluide caloporteur dudit radiateur basse température 20 à l'entrée 7a de fluide caloporteur du premier échangeur de chaleur 7.

Le premier échangeur 7 peut également être relié à une boucle de contournement C reliant entre-elles l'entrée 7a et la sortie 7b de fluide caloporteur dudit premier échangeur de chaleur 7. Cette boucle de contournement C est utile lorsque qu'il n'est pas nécessaire de refroidir ou réchauffer l'air d'admission et permet néanmoins au fluide caloporteur de circuler afin d'éviter les phénomènes d'ébullition et permet également d'homogénéiser le fluide caloporteur.

Comme le montrent les figures 2 et 3, une vanne de régulation 22 est placée à l'une des jonctions entre les boucles de chauffage A, de refroidissement B et de contournement C, afin de commander la circulation du fluide caloporteur dans l'une desdites boucles de chauffage A, de refroidissement B ou de contournement C.

Cette vanne de régulation 22 peut être indifféremment placée en amont ou en aval du premier échangeur de chaleur 7.

Ainsi, la vanne de régulation 22 peut être placée en aval du premier échangeur de chaleur 7 et comporter ainsi une entrée et trois sorties de fluide caloporteur, l'entrée de fluide caloporteur étant reliée à la sortie 7b de fluide caloporteur du premier échangeur de chaleur 7, et chacune des trois sorties de fluide caloporteur étant reliée à l'une des boucles de chauffage A, de refroidissement B ou de contournement C.

De même, la vanne de régulation 22 peut être placée en amont du premier échangeur de chaleur 7 et comporter ainsi trois entrées et une sortie de fluide caloporteur, la sortie de fluide caloporteur étant reliée à l'entrée 7a de fluide caloporteur du premier échangeur de chaleur 7, et chacune des trois entrées de fluide caloporteur étant reliée à l'une des boucles de chauffage A, de refroidissement B ou de contournement C.

Une pompe 24 de circulation du fluide caloporteur est également placée entre l'une des jonctions entre les boucles de chauffage A, de refroidissement B et de contournement C et le premier échangeur de chaleur 7 afin de mettre en mouvement le fluide caloporteur.

Toujours comme illustré par les figures 2 et 3, le second échangeur de chaleur 10 est également relié à une boucle de gestion thermique du moteur D. Cette boucle de gestion thermique du moteur D comprend notamment un système de gestion thermique du moteur 3 dans lequel est disposé un moyen de contrôle du débit 34 du fluide caloporteur circulant dans le moteur 3. A titre d'exemple, un tel moyen de contrôle du débit 34 peut être une vanne à ouverture/fermeture proportionnelle.

La communication entre le second échangeur de chaleur 10 et la boucle de gestion thermique D permet par exemple d'aider au chauffage de l'habitacle ou du moteur 3. De plus, cette liaison est nécessaire pour le refroidissement des gaz d'échappement en destination d'un système récupération des gaz d'échappement 14 lorsque le réchauffement de l'air d'admission n'est pas nécessaire.

Selon un premier mode de réalisation de la liaison entre le second échangeur de chaleur 10 et la boucle de gestion thermique D, illustré par la figure 2, ledit second échangeur de chaleur 10 est relié en parallèle avec le système de gestion thermique du moteur 3. En amont dudit second échangeur de chaleur 10, la boucle de gestion thermique du moteur D rejoint la boucle de chauffage A et en aval dudit second échangeur de chaleur 10, les deux boucles divergent.

Une vanne trois voies 36 est placée à l'une des jonctions entre les boucles de chauffage A et de gestion thermique du moteur D, afin de commander la circulation du fluide caloporteur dans l'une desdites boucles de chauffage A, ou de gestion thermique du moteur D.

Selon un second mode de réalisation de la liaison entre le second échangeur de chaleur 10 et la boucle de gestion thermique D illustré par la figure 3, l'entrée 10a de fluide caloporteur du second échangeur de chaleur 10 est reliée à une dérivation partielle 340 du fluide caloporteur de la boucle de gestion thermique du moteur D.

La sortie 10b de fluide caloporteur du second échangeur de chaleur 10 est quant à elle reliée directement ou indirectement à une réinjection 320 de fluide caloporteur dans la boucle de gestion thermique du moteur D.

De plus, dans ce second mode de réalisation, la boucle de chauffage A comporte un circuit de contournement 38 du premier échangeur de chaleur 7. Ledit circuit de contournement 38 relie directement la sortie 10b de fluide caloporteur du second échangeur de chaleur 10 et la réinjection 320 de fluide caloporteur dans boucle de gestion thermique du moteur D, ledit circuit de contournement 38 comporte également une vanne d'ouverture/fermeture 380.

La réinjection 320 est située en aval d'une pompe mécanique 30 selon le sens d'écoulement du fluide dans la boucle de chauffage A.

La boucle de gestion thermique du moteur D comprend en outre un vanne de préférence du type à ouverture et fermeture proportionnelle de sorte que le débit du fluide caloporteur circulant dans le moteur peut être totalement interrompu. Une telle interruption, obtenue par la fermeture de la vanne 34 favorise notamment le transfert de la totalité des calories puisées sur la ligne d'échappement vers l'air d'admission du moteur. En outre selon certain degré d'ouverture de la vanne, il devient possible de transférer en partie les calories puisées dans la ligne d'échappement au moteur et à l'air d'admission alimentant ce dernier.

La liaison indirecte de la sortie 10b de fluide caloporteur du second échangeur de chaleur 10 est quant à elle réalisée par l'intermédiaire du premier échangeur de chaleur 7 et de la vanne de régulation 22.

Ce second mode de réalisation permet notamment d'économiser la pompe 24 de circulation du fluide caloporteur dans la circulation du fluide caloporteur à l'intérieur de la boucle de chauffage A. En effet, dans ce mode de réalisation la circulation du fluide caloporteur à l'intérieur de la boucle de chauffage A peut être assurée par la pompe mécanique 30 de la boucle de gestion thermique du moteur D.

Suivant dans quelles boucles de circulation de fluide caloporteur la circulation s'effectue, il est possible de définir un procédé de gestion thermique de la température d'air d'admission du moteur 3. Ce procédé de gestion correspond au passage du dispositif de gestion thermique 1 de l'air d'admission d'un mode de fonctionnement à un autre par sélection des boucles dans lesquelles le fluide caloporteur circule. Cette sélection se fait notamment en fonction de consignes envoyées par un dispositif de commande, par exemple électronique.

Les différents modes de fonctionnement sont ainsi :
- un mode de chauffage de l'air d'admission, dans lequel la vanne de régulation 22 ferme la boucle de chauffage A, le fluide caloporteur récupérant de l'énergie calorifique des gaz d'échappement via le second échangeur de chaleur 10 et la restituant à l'air d'admission au niveau du premier échangeur de chaleur 7. Ce mode de fonctionnement est utilisé pour chauffer l'air d'admission au niveau du premier échangeur de chaleur 7.
- un mode de refroidissement, dans lequel la vanne de régulation 22 ferme la boucle de refroidissement B, le fluide caloporteur récupérant l'énergie calorifique de l'air d'admission via le premier échangeur de chaleur 7 et la dissipant au niveau du radiateur basse température 20. Ce mode de refroidissement est utilisé pour refroidir l'air d'admission au niveau du premier échangeur de chaleur 7.
- un mode de contournement, dans lequel la vanne de régulation 22 ferme la boucle de contournement C, l'air d'admission n'étant ni réchauffé ni refroidit, le fluide caloporteur circulant directement depuis la sortie 7b vers l'entrée 7a de fluide caloporteur du premier échangeur de chaleur 7. Ce mode de fonctionnement est utilisé en particulier lorsqu'il n'est pas nécessaire de chauffer ou de refroidir l'air d'admission mais qu'une circulation du fluide caloporteur est toutefois nécessaire pour évité les phénomènes d'ébullition ainsi que pour homogénéiser le fluide caloporteur.
- un mode de régulation dans lequel la vanne de régulation 22 permet le passage du fluide caloporteur à la fois dans la boucle de contournement C et dans la boucle de refroidissement B. Ce mode de réalisation peut être utilisé pour effectuer une gestion fine de la température de l'air d'admission.

Dans le cas où le second échangeur de chaleur 10 est également relié à la boucle de gestion thermique du moteur 3, le procédé de gestion thermique peut comporter un mode de fonctionnement supplémentaire, à savoir un mode détourné où le fluide caloporteur circule entre le second échangeur de chaleur et la boucle de gestion thermique du moteur D.

Ce mode détourné peut être utilisé lorsqu'il n'est pas nécessaire de réchauffer l'air d'admission. L'énergie calorifique prélevée aux gaz d'échappement peut être utilisée pour aider au chauffage de l'habitacle, contribuer à la montée en température du moteur ou encore pour refroidir les gaz d'échappement en vue de leur utilisation dans un système récupération des gaz d'échappement 14.

Ce mode de réalisation peut également être utilisé simultanément avec le mode de refroidissement ou avec le mode de contournement.

Dans ce dernier mode de fonctionnement, la réalisation varie selon le mode de réalisation de la liaison entre le second échangeur de chaleur 10 et la boucle de gestion thermique D.

Selon le premier mode de réalisation, illustré à la figure 2, le mode détourné est obtenu grâce à la vanne trois voies 36 qui dirige le fluide caloporteur vers la boucle de gestion thermique du moteur D.

Selon le second mode de réalisation, illustré à la figure 3 le mode détourné est obtenu grâce à la vanne d'ouverture/fermeture 380 qui ouvre le circuit de contournement 38 du premier échangeur de chaleur 7.

Ainsi, on voit bien que le dispositif de gestion thermique 1 de l'air d'admission de part le placement direct sur la ligne d'échappement principale 12 d'un second échangeur 10 et sa liaison directe avec un premier échangeur 7 placé dans le circuit d'admission d'air 9, permet une meilleur montée en température de l'air d'admission, une meilleur combustion et donc un démarrage plus aisé du moteur 3 avec une consommation et des émission polluantes réduites dans des conditions climatiques froides.

## Revendications

1. Dispositif de gestion thermique (1) de l'air d'admission d'un moteur (3) à explosion équipé d'un turbocompresseur (5), ledit dispositif comportant :
- un premier échangeur de chaleur (7) comportant une entrée (7a) et une sortie (7b) de fluide caloporteur, et placé dans le circuit d'admission d'air (9) entre le compresseur (5a) et le moteur (3),
- un second échangeur de chaleur (10) placé sur la ligne d'échappement principale (12) du moteur (3) et captant l'énergie calorifique des gaz d'échappement, transférant ladite énergie à un fluide caloporteur circulant dans une boucle de chauffage (A) depuis une sortie (10b) et une entrée (10a) de fluide caloporteur,
l'entrée (7a) de fluide caloporteur du premier échangeur de chaleur (7) étant reliée à la sortie (10b) de fluide caloporteur du second échangeur de chaleur (10) et la sortie (7b) de fluide caloporteur du premier échangeur de chaleur (7) étant reliée directement ou indirectement à l'entrée (10a) de fluide caloporteur du second échangeur de chaleur (10), de sorte à former la boucle de chauffage (A),
le premier échangeur de chaleur (7) étant également reliée à :
- une boucle de refroidissement (B) reliant la sortie (7b) de fluide caloporteur du premier échangeur de chaleur (7) à l'entrée (20a) de fluide caloporteur d'un radiateur basse température (20) et reliant la sortie (20b) de fluide caloporteur dudit radiateur basse température (20) à l'entrée (7a) de fluide caloporteur du premier échangeur de chaleur (7),
- une boucle de contournement (C) reliant directement l'entrée (7a) et la sortie (7b) de fluide caloporteur dudit premier échangeur de chaleur (7),
**caractérisé en ce que** :
- une vanne de régulation (22) est placée à une jonction commune aux boucles de chauffage (A), de refroidissement (B) et de contournement (C), de sorte à commander sélectivement la circulation du fluide caloporteur dans chacune desdites boucles de chauffage (A), de refroidissement (B) et de contournement (C),
- une pompe (24) de circulation du fluide caloporteur est placée entre le premier échangeur de chaleur (7) et une jonction entre les boucles de chauffage (A), de refroidissement (B) et de contournement (C), de sorte à mettre en mouvement le fluide caloporteur,
le fluide circulant dans la boucle de contournement (C) sous l'action de la pompe (24) contourne à la fois le radiateur basse température (20) et le second échangeur de chaleur (10) de telle sorte que l'air d'admission n'est ni réchauffé ni refroidi par ce fluide au niveau du premier échangeur de chaleur (7).

2. Dispositif de gestion thermique (1) selon la revendication précédente, **caractérisé en ce qu'**il comporte en outre un système de récupération des gaz d'échappement (14) dit basse pression comportant une dérivation (141) des gaz d'échappement placée sur la ligne d'échappement principale (12) en aval de la turbine (5b) et que le second échangeur de chaleur (10) est placé entre la turbine (5b) et la dérivation (141) du système de récupération des gaz d'échappement (14).

3. Dispositif de gestion thermique (1) selon l'une des revendications précédentes, **caractérisé en ce que** le second échangeur de chaleur (10) est placé en aval des dispositifs de traitement des gaz d'échappement (16).

4. Dispositif de gestion thermique (1) selon l'une des revendications précédentes, **caractérisé en ce que** la ligne d'échappement principale (12) comporte un circuit de contournement (18) du second échangeur de chaleur (10) et dont l'ouverture et la fermeture sont commandées par une vanne de contournement (180).

5. Dispositif de gestion thermique (1) selon l'une des revendications précédentes, **caractérisé en ce que** la vanne de régulation (22) comporte une entrée et trois sorties de fluide caloporteur, l'entrée de fluide caloporteur étant reliée à la sortie (7b) de fluide caloporteur du premier échangeur de chaleur (7), et chacune des trois sorties de fluide caloporteur étant reliée à l'une des boucles de chauffage (A), de refroidissement (B) ou de contournement (C).

6. Dispositif de gestion thermique (1) selon l'une des revendications précédentes, **caractérisé en ce que** la vanne de régulation (22) comporte trois entrées et une sortie de fluide caloporteur, la sortie de fluide caloporteur étant reliée à l'entrée (7a) de fluide caloporteur du premier échangeur de chaleur (7), et chacune des trois entrées de fluide caloporteur étant reliée à l'une des boucles de chauffage (A), de refroidissement (B) ou de contournement (C).

7. Dispositif de gestion thermique (1) selon l'une des revendications précédentes, **caractérisé en ce que** le second échangeur de chaleur (10) est également relié à une boucle de gestion thermique du moteur (D) comprenant notamment un système de gestion thermique (34) du moteur (3).

8. Dispositif de gestion thermique (1) selon la revendication 7, **caractérisé en ce que** :
- le second échangeur de chaleur (10) est relié en parallèle avec le système de gestion thermique (34) du moteur (3), la boucle de gestion thermique du moteur (D) rejoignant la boucle de chauffage (A) en amont dudit second échangeur de chaleur (10) et les deux boucles divergeant en aval dudit second échangeur de chaleur (10),
- une vanne trois voies (36) est placée à l'une des jonctions entre les boucles de chauffage (A) et de gestion thermique du moteur (D), de sorte à commander la circulation du fluide caloporteur dans l'une desdites boucles de chauffage (A), ou de gestion thermique du moteur (D).

9. Dispositif de gestion thermique (1) selon la revendication 7, **caractérisé en ce que** :
- l'entrée (10a) de fluide caloporteur du second échangeur de chaleur (10) est reliée à une dérivation partielle (340) du fluide caloporteur de la boucle de gestion thermique du moteur (D) située en aval d'une pompe mécanique (30) appartenant au système de gestion thermique (34) du moteur (3),
- la sortie (10b) de fluide caloporteur du second échangeur de chaleur (10) est quant à elle reliée directement ou indirectement à une réinjection (320) de fluide caloporteur dans la boucle de gestion thermique du moteur (D),
- la boucle de chauffage (A) comporte un circuit de contournement (38) du premier échangeur de chaleur (7), reliant la sortie (10b) de fluide caloporteur du second échangeur de chaleur (10) et la réinjection (320) de fluide caloporteur dans la boucle de gestion thermique du moteur (D), ledit circuit de contournement (38) comportant une vanne d'ouverture/fermeture (380).

10. Procédé de gestion de-thermique de la température d'air d'admission d'un moteur (3) comportant un dispositif de gestion thermique (1) selon l'une des revendications 1 à 6 **caractérisé en ce que** ledit dispositif de gestion thermique (1) peut passer en fonction d'une consigne d'un des modes de fonctionnement suivant à l'autre :
- un mode de chauffage de l'air d'admission, dans lequel la vanne de régulation (22) ferme la boucle de chauffage (A), le fluide caloporteur récupérant de l'énergie calorifique des gaz d'échappement via le second échangeur de chaleur (10) et la restituant à l'air d'admission au niveau du premier échangeur de chaleur (7),
- un mode de refroidissement, dans lequel la vanne de régulation (22) ferme la boucle de refroidissement (B), le fluide caloporteur récupérant l'énergie calorifique de l'air d'admission via le premier échangeur de chaleur (7) et la dissipant au niveau du radiateur basse température (20),
- un mode de contournement, dans lequel la vanne de régulation (22) ferme la boucle de contournement (C), l'air d'admission n'étant ni réchauffé ni refroidit, le fluide caloporteur circulant directement depuis la sortie (7b) vers l'entrée (7a) de fluide caloporteur du premier échangeur de chaleur (7),
- un mode de régulation dans lequel la vanne de régulation (22) permet le passage du fluide caloporteur à la fois dans la boucle de contournement (C) et dans la boucle de refroidissement (B).

11. Procédé de gestion selon la revendication précédente, **caractérisé en ce que** le dispositif de gestion est un dispositif de gestion (1) selon la revendication 7 et qu'il peut passer également dans un mode détourné où le fluide caloporteur circule entre le second échangeur de chaleur (10) et la boucle de gestion thermique du moteur (D).

12. Procédé de gestion selon la revendication précédente, **caractérisé en ce que** le dispositif de gestion (1) est un dispositif de gestion (1) selon la revendication 8 et que le passage au mode détourné est réalisé par redirection du fluide caloporteur vers ladite boucle de gestion thermique du moteur (D) au moyen de la vanne trois voies (36).

13. Procédé de gestion selon la revendication 11, **caractérisé en ce que** le dispositif de gestion (1) est un dispositif de gestion (1) selon la revendication 9 et que le passage au mode détourné est réalisé par ouverture du circuit de contournement (38) du premier échangeur de chaleur (7) par la vanne d'ouverture/fermeture (380).

## Patentansprüche

1. Vorrichtung zum Wärmemanagement (1) der Ansaugluft eines Verbrennungsmotors (3), der mit einem Turbolader (5) ausgestattet ist, wobei die Vorrichtung aufweist:
- einen ersten Wärmetauscher (7), der einen Einlass (7a) und einen Auslass (7b) für ein Wärmeträgerfluid aufweist und in dem Lufteinlasssystem (9) zwischen dem Verdichter (5a) und dem Motor (3) angeordnet ist,
- einen zweiten Wärmetauscher (10), der in der Hauptabgasleitung (12) des Motors (3) angeordnet ist und die Wärmeenergie der Abgase gewinnt, wobei er diese Energie auf ein Wärmeträgerfluid überträgt, das in einem Heizkreislauf (A) von einem Auslass (10b) zu einem Einlass (10a) für Wärmeträgerfluid zirkuliert,
wobei der Einlass (7a) für Wärmeträgerfluid des ersten Wärmetauschers (7) mit dem Auslass (10b) für Wärmeträgerfluid des zweiten Wärmetauschers (10) verbunden ist und der Auslass (7b) für Wärmeträgerfluid des ersten Wärmetauschers (7) direkt oder indirekt mit dem Einlass (10a) für Wärmeträgerfluid des zweiten Wärmetauschers (10) verbunden ist, um den Heizkreislauf (A) zu bilden, wobei der erste Wärmetauscher (7) außerdem verbunden ist mit:
- einem Kühlkreislauf (B), der den Auslass (7b) für Wärmeträgerfluid des ersten Wärmetauschers (7) mit dem Einlass (20a) für Wärmeträgerfluid eines Niedertemperaturkühlers (20) verbindet und den Auslass (20b) für Wärmeträgerfluid des Niedertemperaturkühlers (20) mit dem Einlass (7a) für Wärmeträgerfluid des ersten Wärmetauschers (7) verbindet,
- einem Umgehungskreislauf (C), der den Einlass (7a) und den Auslass (7b) für Wärmeträgerfluid des ersten Wärmetauschers (7) direkt verbindet,
**dadurch gekennzeichnet, dass**:
- ein Regelventil (22) an einer Verbindungsstelle angeordnet ist, die dem Heizkreislauf (A), dem Kühlkreislauf (B) und dem Umgehungskreislauf (C) gemeinsam ist, um die Zirkulation des Wärmeträgerfluids im Heizkreislauf (A), Kühlkreislauf (B) und Umgehungskreislauf (C) jeweils selektiv zu steuern,
- eine Umwälzpumpe (24) für das Wärmeträgerfluid zwischen dem ersten Wärmetauscher (7) und einer Verbindungsstelle zwischen dem Heizkreislauf (A), dem Kühlkreislauf (B) und dem Umgehungskreislauf (C) angeordnet ist, um das Wärmeträgerfluid in Bewegung zu versetzen,
wobei das Fluid, das unter der Wirkung der Pumpe (24) im Umgehungskreislauf (C) zirkuliert, gleichzeitig den Niedertemperaturkühler (20) und den zweiten Wärmetauscher (10) umgeht, so dass die Ansaugluft durch dieses Fluid am ersten Wärmetauscher (7) weder erwärmt noch gekühlt wird.

2. Vorrichtung zum Wärmemanagement (1) nach dem vorhergehenden Anspruch, **dadurch gekennzeichnet, dass** sie außerdem ein Abgasrückgewinnungssystem (14), Niederdrucksystem genannt, aufweist, das einen Abgasbypass (141) aufweist, der an der Hauptabgasleitung (12) stromabwärts der Turbine (5b) angeordnet ist, und dass der zweite Wärmetauscher (10) zwischen der Turbine (5b) und dem Bypass (141) des Abgasrückgewinnungssystems (14) angeordnet ist.

3. Vorrichtung zum Wärmemanagement (1) nach einem der vorhergehenden Ansprüche, **dadurch gekennzeichnet, dass** der zweite Wärmetauscher (10) stromabwärts der Abgasbehandlungsvorrichtungen (16) angeordnet ist.

4. Vorrichtung zum Wärmemanagement (1) nach einem der vorhergehenden Ansprüche, **dadurch gekennzeichnet, dass** die Hauptabgasleitung (12) einen Umgehungskreislauf (18) des zweiten Wärmetauschers (10) aufweist, dessen Öffnen und Schließen durch ein Umgehungsventil (180) gesteuert werden.

5. Vorrichtung zum Wärmemanagement (1) nach einem der vorhergehenden Ansprüche, **dadurch gekennzeichnet, dass** Regelventil (22) einen Einlass und drei Auslässe für Wärmeträgerfluid aufweist, wobei der Einlass für Wärmeträgerfluid mit dem Auslass (7b) für Wärmeträgerfluid des ersten Wärmetauschers (7) verbunden ist und jeder der drei Auslässe für Wärmeträgerfluid mit einem von dem Heizkreislauf (A), dem Kühlkreislauf (B) oder dem Umgehungskreislauf (C) verbunden ist.

6. Vorrichtung zum Wärmemanagement (1) nach einem der vorhergehenden Ansprüche, **dadurch gekennzeichnet, dass** Regelventil (22) drei Einlässe und einen Auslass für Wärmeträgerfluid aufweist, wobei der Auslass für Wärmeträgerfluid mit dem Einlass (7a) für Wärmeträgerfluid des ersten Wärmetauschers (7) verbunden ist und jeder der drei Einlässe für Wärmeträgerfluid mit einem von dem Heizkreislauf (A), dem Kühlkreislauf (B) oder dem Umgehungskreislauf (C) verbunden ist.

7. Vorrichtung zum Wärmemanagement (1) nach einem der vorhergehenden Ansprüche, **dadurch gekennzeichnet, dass** der zweite Wärmetauscher (10) mit einem Wärmemanagement-Kreislauf des Motors (D) verbunden ist, der insbesondere ein Wärmemanagementsystem (34) des Motors (3) umfasst.

8. Vorrichtung zum Wärmemanagement (1) nach Anspruch 7, **dadurch gekennzeichnet, dass**:
- der zweite Wärmetauscher (10) zum Wärmemanagementsystem (34) des Motors (3) parallelgeschaltet ist, wobei sich der Wärmemanagement-Kreislauf des Motors (D) mit dem Heizkreislauf (A) stromaufwärts des zweiten Wärmetauschers (10) vereinigt und die beiden Kreisläufe sich stromabwärts des zweiten Wärmetauschers (10) trennen,
- ein Dreiwegeventil (36) an einer der Verbindungsstellen zwischen dem Heizkreislauf (A) und dem Wärmemanagement-Kreislauf des Motors (D) angeordnet ist, um die Zirkulation des Wärmeträgerfluids in einem von dem Heizkreislauf (A) und dem Wärmemanagement-Kreislauf des Motors (D) zu steuern.

9. Vorrichtung zum Wärmemanagement (1) nach Anspruch 7, **dadurch gekennzeichnet, dass**:
- der Einlass (10a) für Wärmeträgerfluid des zweiten Wärmetauschers (10) mit einem Teilbypass (340) des Wärmeträgerfluids des Wärmemanagement-Kreislaufs des Motors (D) verbunden ist, der sich stromabwärts einer mechanischen Pumpe (30) befindet, die zum Wärmemanagementsystem (34) des Motors (3) gehört,
- der Auslass (10b) für Wärmeträgerfluid des zweiten Wärmetauschers (10) wiederum direkt oder indirekt mit einer Wiedereinleitung (320) von Wärmeträgerfluid in den Wärmemanagement-Kreislauf des Motors (D) verbunden ist,
- der Heizkreislauf (A) einen Umgehungskreis (38) des ersten Wärmetauschers (7) aufweist, der den Auslass (10b) für Wärmeträgerfluid des zweiten Wärmetauschers (10) und die Wiedereinleitung (320) von Wärmeträgerfluid in den Wärmemanagement-Kreislauf des Motors (D) verbindet, wobei der Umgehungskreis (38) ein Öffnungs-/Schließventil (380) aufweist.

10. Verfahren zum Wärmemanagement der Ansauglufttemperatur eines Motors (3), der eine Vorrichtung zum Wärmemanagement (1) nach einem der Ansprüche 1 bis 6 aufweist, **dadurch gekennzeichnet, dass** die Vorrichtung zum Wärmemanagement (1) in Abhängigkeit von einer Vorgabe von einer der folgenden Betriebsarten in eine andere übergehen kann:
- eine Betriebsart der Erwärmung der Ansaugluft, in welcher das Regelventil (22) den Heizkreislauf (A) schließt, wobei das Wärmeträgerfluid die Wärmeenergie der Abgase über den zweiten Wärmetauscher (10) zurückgewinnt und sie am ersten Wärmetauscher (7) an die Ansaugluft abgibt,
- eine Kühlungs-Betriebsart, in welcher das Regelventil (22) den Kühlkreislauf (B) schließt, wobei das Wärmeträgerfluid die Wärmeenergie der Ansaugluft über den ersten Wärmetauscher (7) gewinnt und sie am Niedertemperaturkühler (20) ableitet,
- eine Umgehungs-Betriebsart, in welcher das Regelventil (22) den Umgehungskreislauf (C) schließt, wobei die Ansaugluft weder erwärmt noch gekühlt wird, wobei das Wärmeträgerfluid direkt vom Auslass (7b) zum Einlass (7a) für Wärmeträgerfluid des ersten Wärmetauschers (7) strömt,
- eine Regelungs-Betriebsart, in welcher das Regelventil (22) den Durchfluss des Wärmeträgerfluids gleichzeitig im Umgehungskreislauf (C) und im Kühlkreislauf (B) ermöglicht.

11. Managementverfahren nach dem vorhergehenden Anspruch, **dadurch gekennzeichnet, dass** die Managementvorrichtung eine Managementvorrichtung (1) nach Anspruch 7 ist und dass sie auch in eine Umleitungs-Betriebsart übergehen kann, in der das Wärmeträgerfluid zwischen dem zweiten Wärmetauscher (10) und dem Wärmemanagement-Kreislauf des Motors (D) zirkuliert.

12. Managementverfahren nach dem vorhergehenden Anspruch, **dadurch gekennzeichnet, dass** die Managementvorrichtung (1) eine Managementvorrichtung (1) nach Anspruch 8 ist und dass der Übergang in die Umleitungs-Betriebsart durch Umlenkung des Wärmeträgerfluids in den Wärmemanagement-Kreislauf des Motors (D) mittels des Dreiwegeventils (36) erfolgt.

13. Managementverfahren nach Anspruch 11, **dadurch gekennzeichnet, dass** die Managementvorrichtung (1) eine Managementvorrichtung (1) nach Anspruch 9 ist und dass der Übergang in die Umleitungs-Betriebsart durch Öffnen des Umgehungskreises (38) des ersten Wärmetauschers (7) durch das Öffnungs-/Schließventil (380) erfolgt.

## Claims

1. Intake air thermal management device (1) for an internal combustion engine (3) provided with a turbocharger (5), said device comprising:
- a first heat exchanger (7) comprising a heat transfer fluid inlet (7a) and a heat transfer fluid outlet (7b) and positioned in the air intake circuit (9) between the compressor (5a) and the engine (3),
- a second heat exchanger (10) positioned on the main exhaust line (12) of the engine (3) and collecting the heat energy from the exhaust gases, transferring said energy to a heat transfer fluid circulating in a heating loop (A) from a heat transfer fluid outlet (10b) and a heat transfer fluid inlet (10a),
the heat transfer fluid inlet (7a) of the first heat exchanger (7) being connected to the heat transfer fluid outlet (10b) of the second heat exchanger (10) and the heat transfer fluid outlet (7b) of the first heat exchanger (7) being connected directly or indirectly to the heat transfer fluid inlet (10a) of the second heat exchanger (10), so as to form the heating loop (A),
the first heat exchanger (7) being also connected to:
- a cooling loop (B) connecting the heat transfer fluid outlet (7b) of the first heat exchanger (7) to the heat transfer fluid inlet (20a) of a low temperature radiator (20) and connecting the heat transfer fluid outlet (20b) of said low temperature radiator (20) to the heat transfer fluid inlet (7a) of the first heat exchanger (7),
- a bypass loop (C) connecting the heat transfer fluid inlet (7a) and the heat transfer fluid outlet (7b) of said first heat exchanger (7),
**characterized in that**:
- a control valve (22) is positioned at one junction common to the heating (A), cooling (B) and bypass (C) loops so as to control the circulation of heat transfer fluid in selectively each of said heating (A), cooling (B) and or bypass (C) loops,
- a heat transfer fluid circulation pump (24) is positioned between the first heat exchanger (7) and a junction between the heating (A), cooling (B) and bypass (C) loops so as to cause the heat transfer fluid to flow,
the fluid circulating in the bypass loop (c) under the action of the pump (24) bypasses both the low temperature radiator (20) and the second heat exchanger (10) such that the intake air is neither heated nor cooled by this fluid at the first heat exchanger (7).

2. Thermal management device (1) according to the preceding claim, **characterized in that** it further comprises an exhaust gas recovery system (14), a so-called low pressure system comprising an exhaust gas diversion (141), positioned on the main exhaust line (12) downstream of the turbine (5b) and **in that** the second heat exchanger (10) is positioned between the turbine (5b) and the diversion (141) of the exhaust gas recovery system (14).

3. Thermal management device (1) according to one of the preceding claims, **characterized in that** the second heat exchanger (10) is positioned downstream of the exhaust gas treatment devices (16).

4. Thermal management device (1) according to one of the preceding claims, **characterized in that** the main exhaust line (12) comprises a bypass circuit (18) of the second heat exchanger (10), the opening and closing thereof being controlled by a bypass valve (180).

5. Thermal management device (1) according to one of the preceding claims, **characterized in that** the control valve (22) comprises a heat transfer fluid inlet and three heat transfer fluid outlets, the heat transfer fluid inlet being connected to the heat transfer fluid outlet (7b) of the first heat exchanger (7) and each of the three heat transfer fluid outlets being connected to one of the heating (A), cooling (B) or bypass (C) loops.

6. Thermal management device (1) according to one of the preceding claims, **characterized in that** the control valve (22) comprises three heat transfer fluid inlets and one heat transfer fluid outlet, the heat transfer fluid outlet being connected to the heat transfer fluid inlet (7a) of the first heat exchanger (7) and each of the three heat transfer fluid inlets being connected to one of the heating (A), cooling (B) or bypass (C) loops.

7. Thermal management device (1) according to one of the preceding claims, **characterized in that** the second heat exchanger (10) is also connected to a loop for the thermal management of the engine (D) comprising, in particular, a thermal management system (34) of the engine (3).

8. Thermal management device (1) according to Claim 7, **characterized in that**:
- the second heat exchanger (10) is connected in parallel to the thermal management system (34) of the engine (3), the loop for the thermal management of the engine (D) connecting the heating loop (A) upstream of said second heat exchanger (10) and the two loops diverging downstream of said second heat exchanger (10),
- a three-way valve (36) is positioned at one of the junctions between the heating loop (A) and the loop for the thermal management of the engine (D), so as to control the circulation of heat transfer fluid in one of the following: said heating loop (A) or said loop for the thermal management of the engine (D).

9. Thermal management device (1) according to Claim 7, **characterized in that**:
- the heat transfer fluid inlet (10a) of the second heat exchanger (10) is connected to a partial diversion (340) of heat transfer fluid of the loop for the thermal management of the engine (D) located downstream of a mechanical pump (30) belonging to the thermal management system of the engine (3),
- the heat transfer fluid outlet (10b) of the second heat exchanger (10) is in turn connected directly or indirectly to a heat transfer fluid reinjection point (320) in the loop for the thermal management of the engine (D),
- the heating loop (A) comprises a bypass circuit (38) of the first heat exchanger (7), connecting the heat transfer fluid outlet (10b) of the second heat exchanger (10) and the heat transfer fluid reinjection point (320) in the loop for the thermal management of the engine (D), said bypass circuit (38) comprising an opening/closing valve (380).

10. Method for the thermal management of the temperature of the intake air of an engine (3) comprising a thermal management device (1) according to one of Claims 1 to 6, **characterized in that** said thermal management device (1) is able to pass, as a function of a reference variable, from one of the following successive operating modes:
- a heating mode for the intake air, in which the control valve (22) closes the heating loop (A), the heat transfer fluid recovering the heat energy from the exhaust gases via the second heat exchanger (10) and returning said energy into the intake air in the region of the first heat exchanger (7),
- a cooling mode, in which the control valve (22) closes the cooling loop (B), the heat transfer fluid recovering the heat energy from the intake air via the first heat exchanger (7) and dissipating said energy in the region of the low temperature radiator (20),
- a bypass mode in which the control valve (22) closes the bypass loop (C), the intake air being neither heated nor cooled, the heat transfer fluid circulating directly from the heat transfer fluid outlet (7b) to the heat transfer fluid inlet (7a) of the first heat exchanger (7),
- a control mode in which the control valve (22) permits the passage of heat transfer fluid both in the bypass loop (C) and in the cooling loop (B) .

11. Method for management according to the preceding claim, **characterized in that** the management device is a management device (1) according to Claim 7, and **in that** it may also pass into a deviated mode where the heat transfer fluid circulates between the second heat exchanger (10) and the loop for the thermal management of the engine (D).

12. Method for management according to the preceding claim, **characterized in that** the management device (1) is a management device (1) according to Claim 8 and **in that** the passage to the deviated mode is implemented by redirecting the heat transfer fluid toward said loop for the thermal management of the engine (D) by means of the three-way valve (36).

13. Method for management according to Claim 11, **characterized in that** the management device (1) is a management device (1) according to Claim 9 and **in that** the passage to the deviated mode is implemented by opening the bypass circuit (38) of the first heat exchanger (7) via the opening/closing valve (380).
